# EUROPEAN PATENT APPLICATION

(11) **EP 1 107 118 A2**
(43) Date of publication of application: **13.06.2001**
(21) Application number: 00123939.1
(22) Date of filing: 03.11.2000
(51) Int. Cl.: G06F 11/00

(54) **Multiprocessor system and fault recovery method thereof**

(30) Priority: 05.11.1999 JP 31481399
(71) Applicant: NEC CORPORATION, Tokyo (JP)
(72) Inventor: Kishida, Yuichi, c/o NEC Corporation, Tokyo (JP)
(74) Representative: VOSSIUS & PARTNER

(57) **Abstract**

Detecting a fault at the time of access to a memory 300, a cell 400 sends a fault report to a service processor 600. The service processor 600 turns back the fault report it receives as a command for temporarily stopping the cell operation, broadcasts the command to all cells 400 and instantaneously stops the operation of all the cells 400. Thereafter, the service processor 600 collects information necessary a fault analysis from each cell 400, executes the fault analysis, cuts off logically a suspected cell from the system, reconstructs the system, releases a temporary stop condition of each cell, and continues the system operation.

## Description

This invention relates to a fault recovery method of a multiprocessor system. More particularly, this invention relates to a multiprocessor system constituted by mutually connecting a plurality of cells each including a memory and at least one processor by a mutual connection network, and a fault recovery method thereof.

One of parallel computers is a multiprocessor system called a cluster computer. This multiprocessor system includes a plurality of cells each having a memory and at least one processor. These cells are mutually connected by a high-speed mutual connection network such as a cross bar network. The system construction of the multiprocessor of this kind can be changed in a cell unit, and the multiprocessor can be operated as an individual multiprocessor system (node) in the cell unit.

One of the advantages of the cluster computer is its high cost performance ratio. When a work station having a high processing capacity, though economical, is used for an individual cell, for example, a cost performance ratio by far more excellent than that of a large-scale computer can be obtained. Another advantage is that the system scale can be expanded more easily than a centralized shared memory type parallel computer in which shared memories are physically concentrated and arranged at one position. Still another advantage is that different nodes can individually execute different jobs or a plurality of nodes can simultaneously execute one job as a parallel program. In other words, the cluster computer can assume various job processing forms. This is because each node is independent as one computer under control of its dedicated operating system. Therefore, the cluster computer has been utilized for servers for which quick counter-plans to a variety of clients' requests as well as high performance, high reliability and high versatility are required. Mention can be made of Japanese Patent Laid-Open Publication No. 8-305677 (305677/1996), for example, as a prior art reference dealing with such a cluster computer.

The cluster computer is a distributed shared memory type parallel computer in which a shared memory is distributively arranged for a cell unit as a local memory. Since it is a kind of the shared memory type computers, an inter-processor communication model depends on the shared memory model. In other words, the processor of each cell does not recognize to which cell a memory area of an access destination is physically assigned, and gains direct access to the shared memory by address designation through an ordinary memory access operation to accomplish communication between the cells. Explanation will be given more concretely. When the memory access request generated inside its own cell is the access to the memory packaged to its own cell, the memory access request is transferred to the memory of its own cell and the access result is reported to memory accessing source. When the memory access request generated inside its own cell is the access to the memory packaged to other cell, on the other hand, the memory access request is transferred to other cell through the mutual connection network. The memory is accessed in this other cell, and the access result is returned to the requesting cell and reported to the memory accessing source.

As described above, the cluster computer has the excellent advantages in that it can be operated as an individual multiprocessor system (node) in the cell unit. However, each cell is connected to one another through the mutual connection network and inter-processor communication is executed in accordance with the shared memory model. Therefore, if any fault occurs in a certain cell, there is a high possibility that this fault is transferred to other cells. When an uncorrectable memory fault occurs in a certain area of the memory packaged to a certain cell, the hardware fault of the occurrence of the uncorrectable fault in a memory as the main storage constituting the computer is generally the fault having extremely high criticality. Therefore, the cell that gains access to this area proves a system fault factor even when the memory area is of the memory packaged to other cell. When other cells gain access to this memory area one after another, the system stop fault factor develops in the remaining cells, too. In consequence, the system stop fault factor occurs in all the cells in the worst case, inviting breakdown of the entire system. When other cell gains access to an illegal address, the error propagates among the cells, or a certain fault or error invites sometimes another fault or error.

For these reasons, when any error or fault develops in a certain cell during the operation of the cluster computer, propagation of the error or fault must be quickly prevented among the cells. However, no effective technology has yet been proposed up to this date. It has not been possible, therefore, to stipulate the suspected cell due to the propagation of the fault, to cut off the suspected cell and to reconstruct the system.

It is an object of the present invention to provide a fault recovery method of a multiprocessor system capable of preventing in advance the propagation of a fault when the fault occurs in a certain cell during the system operation.

It is another object of the present invention to provide a fault recovery method of a multiprocessor system capable of improving reliability and versatility of the system.

It is still another object of the present invention to provide a multiprocessor system having the function of executing the fault recovery method described above.

The present invention provides a fault recovery method of a multiprocessor system wherein a plurality of cells each comprising a memory and at least one processor are connected to one another through a mutual connection network, and each cell and a service processor are connected to one another.

According to one aspect of the present invention, there is provided a fault recovery method that comprises the steps of sending a fault report from a cell that detects a fault to a service processor at the time of access to a shared resource inclusive of a memory, and stopping instantaneously the operations of all the cells by means of the service processor receiving the fault report.

More concretely, the service processor instructs all the cells to temporarily stop the operation upon receiving the fault report. Preferably, the service processor turns back and broadcasts hardware-wise the fault report it receives, as a command to temporarily stop the cell operation.

The service processor may be so constituted as to execute the steps of further collecting information necessary for analyzing the fault from each cell after stopping temporarily the operations of all the cells, and executing fault analysis for stipulating a suspected cell, cutting off logically the suspected cell so stipulated from the system and reconstructing the system, and releasing the temporary stop condition of each cell after the reconstruction of the system and continuing the system operation.

In the present invention described above, when a fault such as an uncorrectable memory fault or access to an illegal address is detected in a certain cell when access is made to a shared resource such as a memory and an input/output device, the fault report is generated from that cell to the service processor. Receiving this fault report, the service processor instantaneously stops the operations of all the cells. Therefore, propagation of the fault among the cells can be prevented in advance. After stopping temporarily the operations of all the cells, the service processor collects information necessary for analyzing the fault, analyzes this fault and stipulates the suspected cell. Next, the service processor logically cuts off the suspected cell so stipulated from the system, reconstructs the system, and continues the system operation by releasing the temporary stop condition of each cell. Consequently, the present invention can improve reliability and versatility of the system.
Fig. 1 is a block diagram showing an example of a multiprocessor system to which the present invention is applied;
Fig. 2 is a block diagram showing an embodiment of the cell control circuit shown in Fig. 1;
Fig. 3 is a flowchart useful for explaining the operation of the multiprocessor system shown in Fig. 1;
Fig. 4 is a flowchart useful for explaining the operation of the service processor shown in Fig. 1;
Fig. 5 is a block diagram showing the construction of the service processor, that receives a fault report, for stopping immediately and temporarily all cells;
Fig. 6 is a table showing a set example of an address conversion table in the present invention;
Fig. 7 is a memory map showing an example of a memory construction in the present invention;
Fig. 8 is a block diagram useful for explaining a fault recovery processing in the multiprocessor system to which the present invention is applied;
Fig. 9 is a diagram useful for explaining a concrete example of a fault recovery processing in the multiprocessor system to which the present invention is applied;
Fig. 10 is a block diagram useful for explaining a concrete example of a fault recovery processing in the multiprocessor system to which the present invention is applied;
Fig. 11 is a block diagram useful for explaining a concrete example of the fault recovery processing in the multiprocessor system to which the present invention is applied; and
Fig. 12 is a block diagram showing another example of the multiprocessor system to which the present invention is applied.

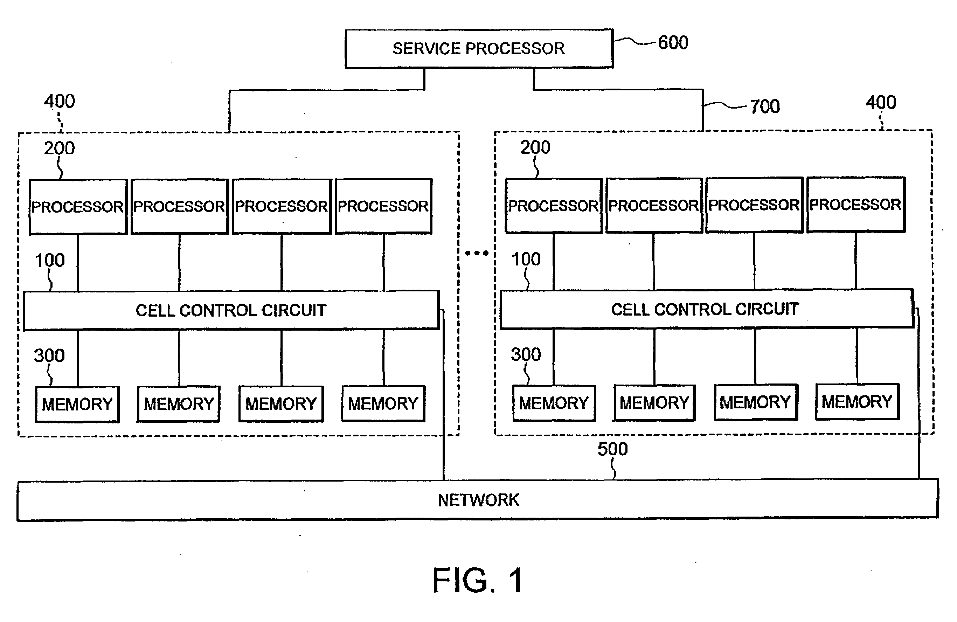

A multiprocessor system according to a first embodiment of the present invention will be explained with reference to Figs. 1 to 11. Referring initially to Fig. 1, the multiprocessor system is shown comprising a plurality of cells 400 that are connected to one another through a network (mutual connection network) 500. This multiprocessor system has four cells 400 (only two being shown in the drawing). Each cell 400 includes four processors 200, four memories (inclusive of memory controller) 300 and a cell control circuit 100. However, these numbers can be selected arbitrarily depending on the system requirement. Each cell 400 is connected to a service processor 600 through a dedicated line 700.

The memories 300 are distributed and arranged inside each cell 400. When these memories 300 are viewed from the processor side (200), the memories inside its own cell and the memories of other cells exist. However, the processor 200 does not recognize to which cell the memory area as the access destination is assigned physically. The processor 200 directly accesses the memory 300 by address designation through an ordinary memory access operation. In other words, an inter-processor communication model follows a shared memory model. It is the cell control circuit 100 in this embodiment that supports this shared memory model.

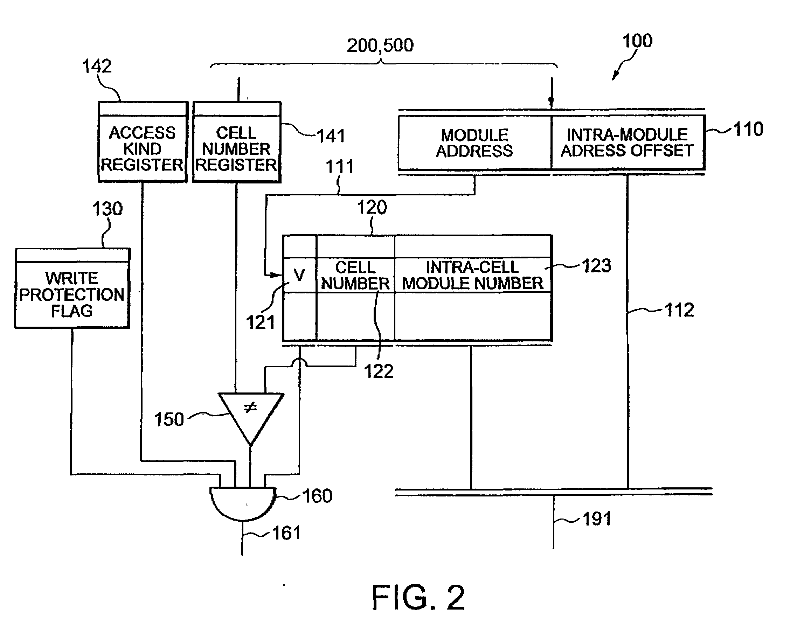

Referring to Fig. 2, the cell control circuit 100 inside each cell includes an address register 110, an address-solving table 120, a write protection flag 130, a cell number register 141, an access kind register 142, a comparator 150, and an AND circuit 160.

The service processor 600 initially sets the address-solving table 120 at the time of activation of the system. The address-solving table 120 constitutes the memories 300 existing dispersedly inside each cell into a single memory space in which the addresses do not overlap with one another. When the address-solving table 120 is retrieved, it becomes possible to know to which physical cell the memory address requested by the processor 200 is directed. The address-solving table 120 has a plurality of entries, and is retrieved by a module address 111 inside the address from the processor 200 held in the address register 110 or from the network 500. Each entry holds an effective bit 121, a cell number 122, and an intra-cell module number 123. The effective bit 121 represents whether or not the entry is effective. When "0", for example, the entry is not effective and when "1", the entry is effective. The cell number 122 represents the number of the cell in which the memory module corresponding to the address exists. The intra-cell module number 123 represents which memory 300 inside the cell the memory module corresponding to this address is. An intra-cell address 191 is generated when the intra-cell module number 123 and an intra-module address offset 112 are linked with each other.

The write protection flag 130 represents whether or not write is permitted when the access from other cell is for write. When "0", for example the write protection flag 130 permits the write operation from other cell but when "1", it does not permit the write operation from other cell but regards it as address exception.

The cell number register 141 is the register that stores the cell number of the cell in which the processor 200 generating the access request exists. The access kind register represents the kind of the access request. When "1", for example, it means write. The comparator 150 compares the content of the cell number register 141 with the cell number 122 that is read out from the address-solving table 120. The AND circuit 160 outputs an address exception occurrence signal 161 when the effective bit 121 of the address-solving table 120 represents "effective", the access kind is 'write", the write protection flag 130 does not permit write and the cell number 122 read out from the address-solving table 120 does not coincide with the value of the cell number register 141.

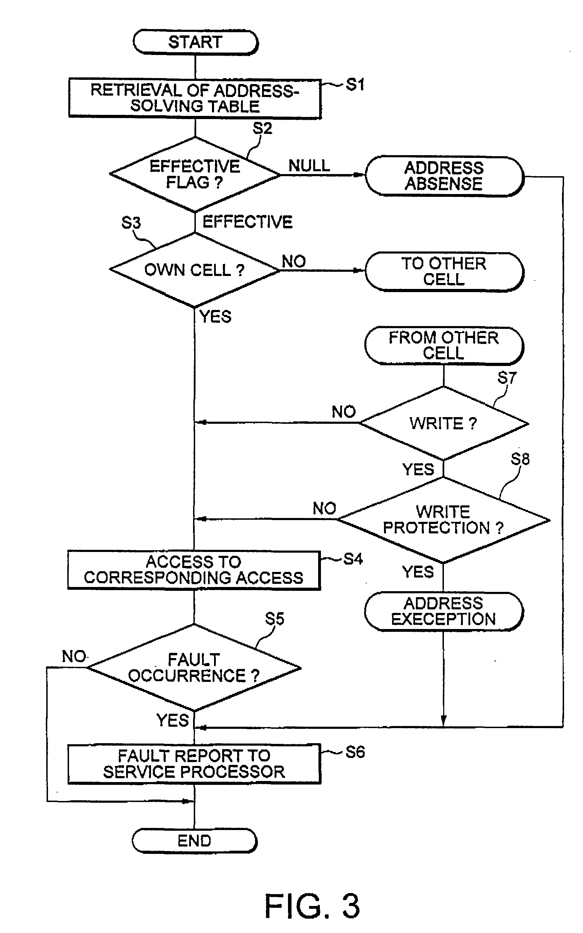

Next, the memory access operation of the processor 200 will be explained with reference to Figs. 1 to 3. When the processor 200 generates the memory access, the address-solving table 120 is retrieved through the module address 111 (step S1 in Fig. 3). As a result, when the effective flag 121 represents nullity (step S2), the memory access is handled as the address absence exception because the access is made to the address that does not exist. When the memory access is found as the one directed to the memory address in other cell (step S3), the access is made in other cells through the network 500. If the address is the memory address existing inside the own cell of the processor, the access is made to the corresponding memory module inside the own cell (step S4).

On the other hand, when the access is made from other cell and this access is not the write access (step S7), the access is made to the corresponding memory module in the same way as in the case of the own cell (step S4). In contrast, when the access from other cell is the write access, the write protection flag 130 is checked (step S8). When the write protection flag 130 permits write from other cell, the access is made to the corresponding memory module (step S4), and when permission of write is not permitted, the access proves the access exception.

When a parity error and an uncorrectable memory fault occur as a result of the access to the corresponding memory module (step S5), the fault report is sent to the service processor 600 through the dedicated line 700 (step S6). When the address absence exception and the access exception occur, too, the fault report is sent to the service processor 600 through the dedicated line 700 (step S6).

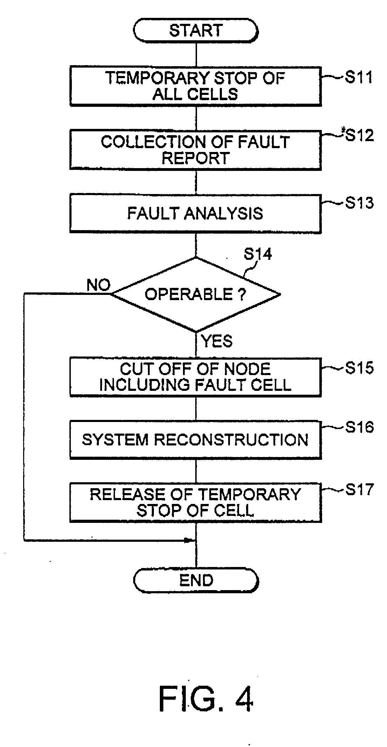

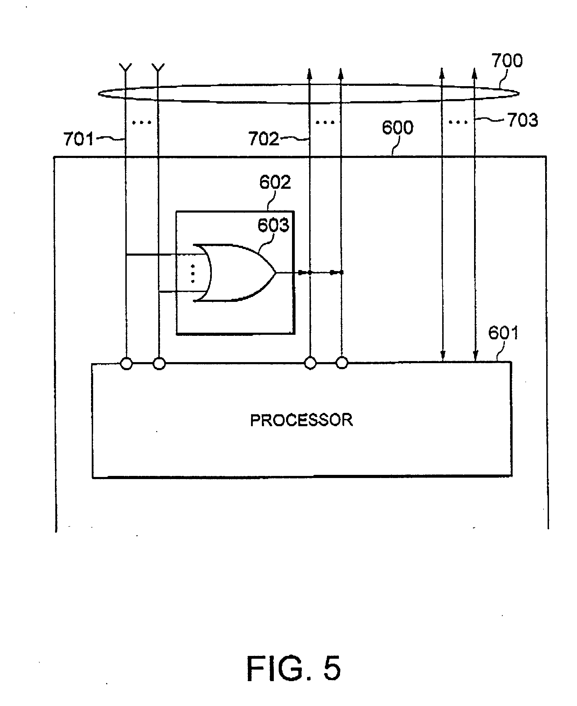

Next, the operation of the service processor 600 when it receives the fault report will be explained with reference to Fig. 4. Receiving the fault report, the service processor 600 stops immediately and temporarily the operation of all the cells 400 (step S11). Fig. 5 shows its example.
In Fig. 5, a signal line 701 for transferring the fault report from each cell 400 is shown connected to an interrupt terminal of a processor 601 inside the service processor 600 and also to an input terminal of an OR circuit 603 that constitutes a loop-back circuit 602. The output of the OR circuit 603 is connected to a signal line 702 for transferring the command, that stops temporarily the operation, to each constituent element of each cell 400. Consequently, when the fault report is outputted to the signal line 701, the command for temporarily stopping the cell operation is instantaneously broadcast to all the cells. The processor 601 can recognize the fault report by the interruption that is generated by the signal line 702. The processor 601 can release the temporary stop command by controlling the condition of the signal line 702. Other signal line group 703 constituting the dedicated line 700 is the signal line group that is used by the service processor 600 for initial setting of the system, setting at the change of the construction, cut-off of the cell(s) or the node(s), setting at the time of assembly; collection of the fault information, and so forth.

The service processor 600 collects various information necessary for analyzing the fault as the fault information from all the cells 400 that stop operating (step S12), and executes the fault analysis to check which fault develops in which cell and to determine the range of influences of that fault (step S13). This information includes an exception occurring address, a fault occurring address, kinds of exceptions and faults, information of transactions generated immediately before the temporary stop and internal register information of the processor. The service processor 600 stipulates the cell (suspected cell) as the cause of the fault, cuts off the suspected cell and the node including the suspected cell from the system operation, and judges whether or not the system is operable (step S14). Judging that the system is operable, the service processor 600 cuts off logically the suspected cell and the node including this cell from the system (step S15) and reconstructs the system by the remaining cells (step S16). When setting after modification of the construction is completed and the system becomes operable without the suspected cell and the suspected node, the service processor 600 releases the temporary stop command for the cells 400 (step S17). In consequence, the system resumes its operation under the state where the suspected node and the suspected cell are cut off. On the other hand, there is the case where the system operation becomes impossible if the suspected cell and the node including the suspected cell are cut off from the system, such as when the normal nodes other than the suspected cell and the suspected node including it do not remain. In this case, the steps S15 to S17 are skipped, and the system remains at halt.

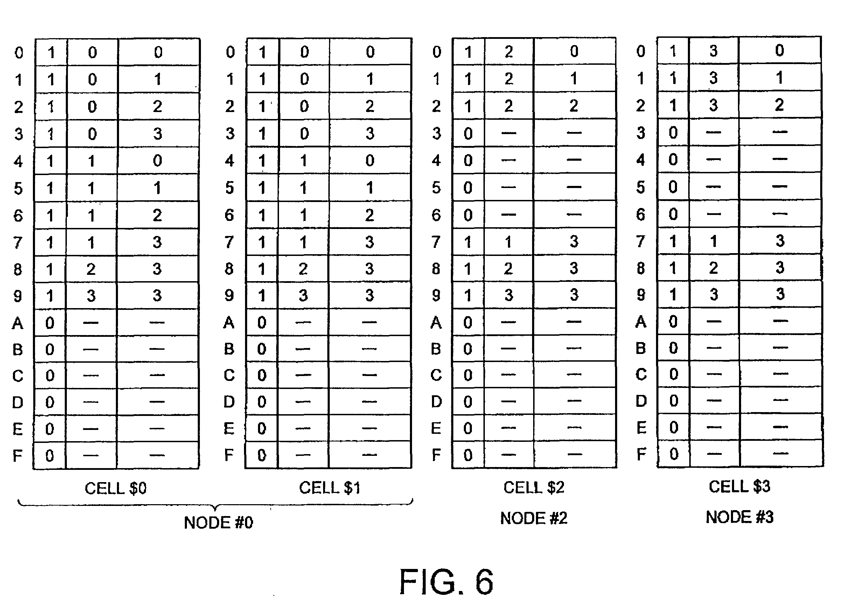

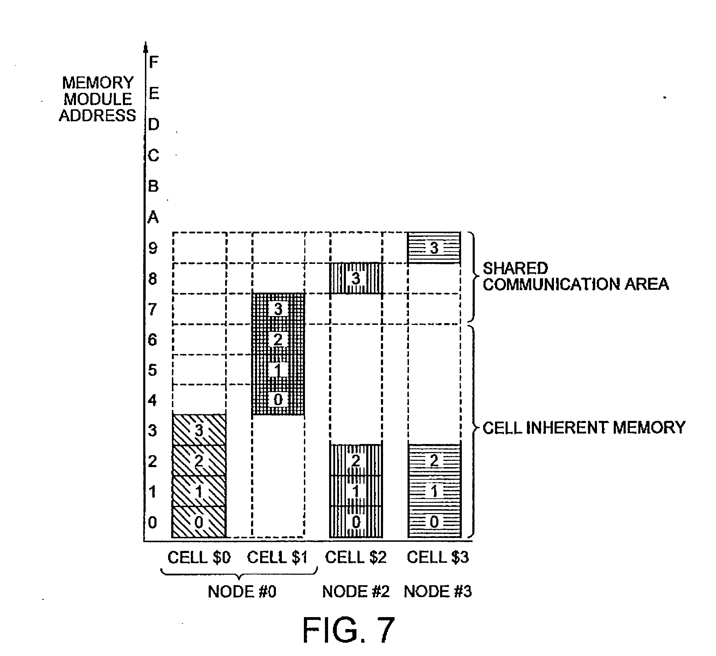

Next, a concrete example of this embodiment will be explained with reference to Figs. 6 to 8. The memory construction shown in Fig. 7 is accomplished when the address-solving table 120 of the four cells 400 ($0 to$3) is set as shown in Fig. 6. In Fig. 7, portions indicated by solid lines represent the memories that are physically mounted to each cell.
Although all the cells are assumed hereby to have an equivalent quantity of the memories, they need not have the same quantity in practice. The ordinate represents the memory address when it is viewed from each cell, and all the nodes are assumed to have the space starting from the 0 address.

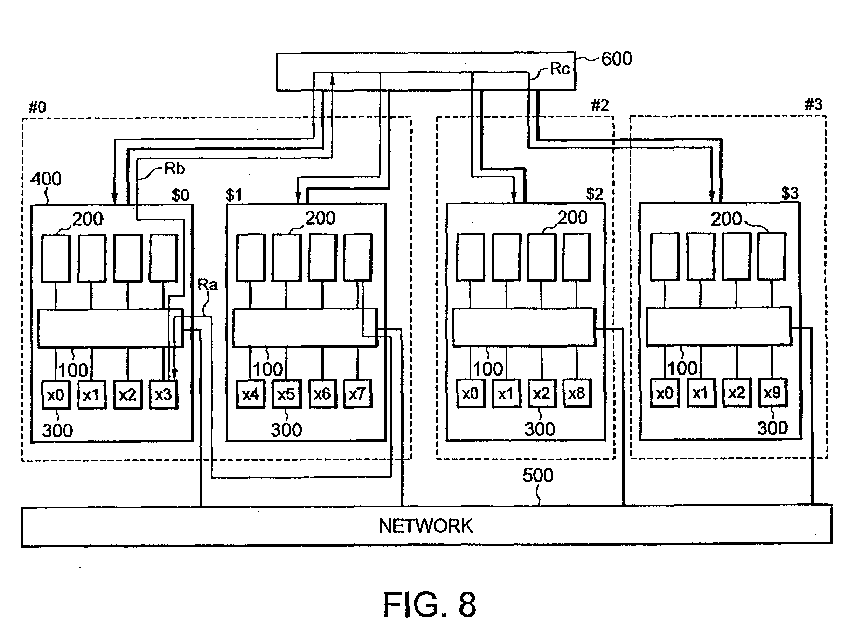

In this memory construction, the cells $0 and$1 constitute an independent computer having a symmetric multiprocessor construction. These two cells operate as one node #0, and constitute a 3-node cluster computer in cooperation with the cell $2 (node #2) and the cell $3 (node #3) as shown in Fig. 8. This cluster computer is constituted in such a manner that in the node #0, all the physical memories of the cell $0 and the memory modules x0 to x2 of the cell $1, or seven modules in total, can be accessed in common as local memories from the cells $0 and$1.
The memory module x3 of the cell $1 is shared as the cluster shared memory (communication area) among the nodes. The memory modules x0 to x2 of each of the cells $2 and $3 are mapped to the local memories of the respective nodes and are mutually independent (cell inherent memory). On the other hand, two modules, i.e. the memory module x8 of the cell $2 and the memory module x9 of the cell $3, are set to a shared communication area.

In the case of setting of Fig. 6, the write protection flag 130 is so set as to permit the write access from a specific cell (the cell constituting the same node).

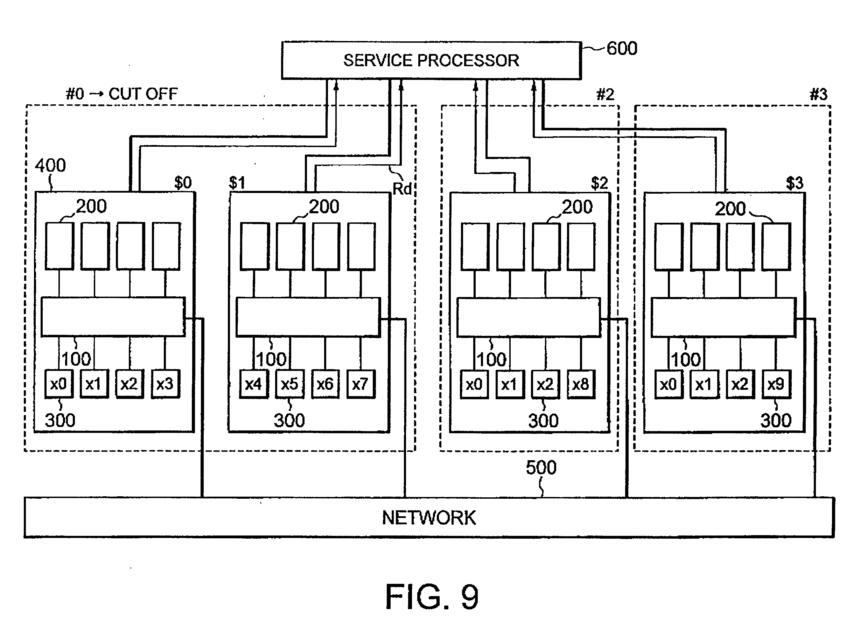

Next, a concrete example of the fault recovery processing in this embodiment will be explained with reference to Figs. 8 to 11. It will be assumed in Fig. 8 that a certain processor 200 of the cell $1 in the node #0 generates the memory access request to the memory module x3 of the cell $0 of the same node #0. In this case, the request is processed through a route Ra. The memory module x3 is accessed in the cell $0. Assuming that an uncorrectable memory fault occurs at this time in the memory module x3, for example, the cell $0 detecting the memory fault outputs the fault report to the service processor 600 (represented by route Rb). This fault report is turned back hardware-wise and is broadcast as the temporary stop command to all the cells $0 to $3 (represented by route Rc). In consequence, all the cells $0 to $3 stop temporarily their operation. Thereafter, the service processor 600 collects the fault information from all the cells $0 to$3 (represented by route Rd in Fig. 9) and executes the fault analysis. The service processor 600 discriminates that the uncorrectable memory fault occurs in the memory module x3 of the cell $0 of the same node #0 at the time of the memory access request from the cell $1, and that its influences are limited within the node #0. In this case, the service processor 600 cuts off the node #0 inclusive of the suspected cell $0 from the system and continues the system operation by using only the nodes #2 and #3.

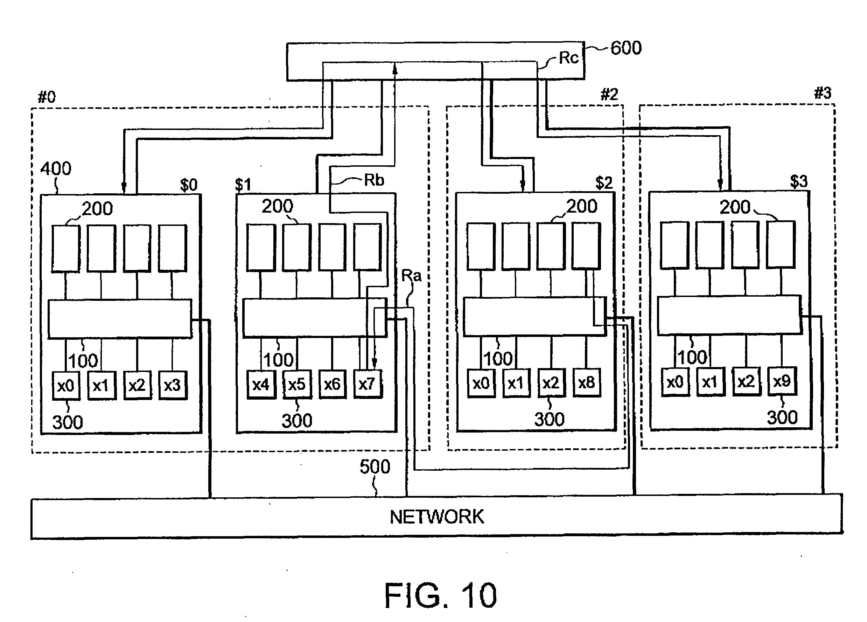

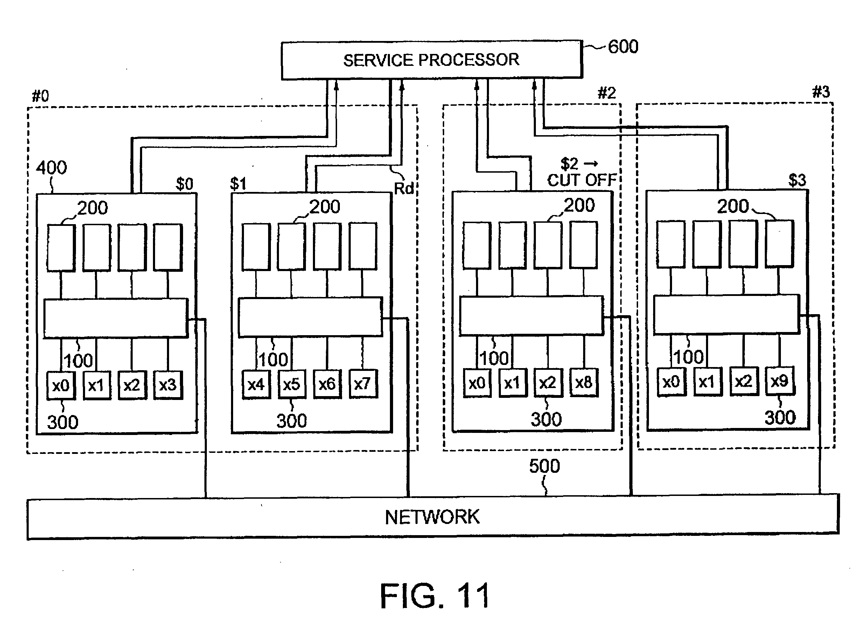

It will be assumed, on the other hand, that a certain processor 200 of the cell $2 of the node #2 gains the write access to the memory module x7 in the cell $1 of the node #0 to which write protection is applied (indicated by route Ra in Fig. 10), in Fig. 10. In this case, the access exception occurs in the cell $1, and the cell $1 outputs the fault report to the service processor 600 (indicated by route Rb in Fig. 10). This fault report is turned back hardware-wise and is broadcast as the temporary stop command to all the cells $0 to$3 (indicated by route Rc in Fig. 10). In consequence, all the cells $0 to$3 stop temporarily their operation. Thereafter, the service processor 600 collects the fault information from all the cells $0 to $3 (indicated by route Rd in Fig. 11) and executes the fault analysis. The service processor 600 discriminates that the access exception occurs because the cell $2 of the node #2 makes the write access to the memory module x7 of the cell $1 of the node #0, and that its influences are limited within the node #2. In this case, the service processor 600 cuts off the node #2 inclusive of the suspected cell $2 from the system and continues the system operation by using only the nodes #0 and #3.

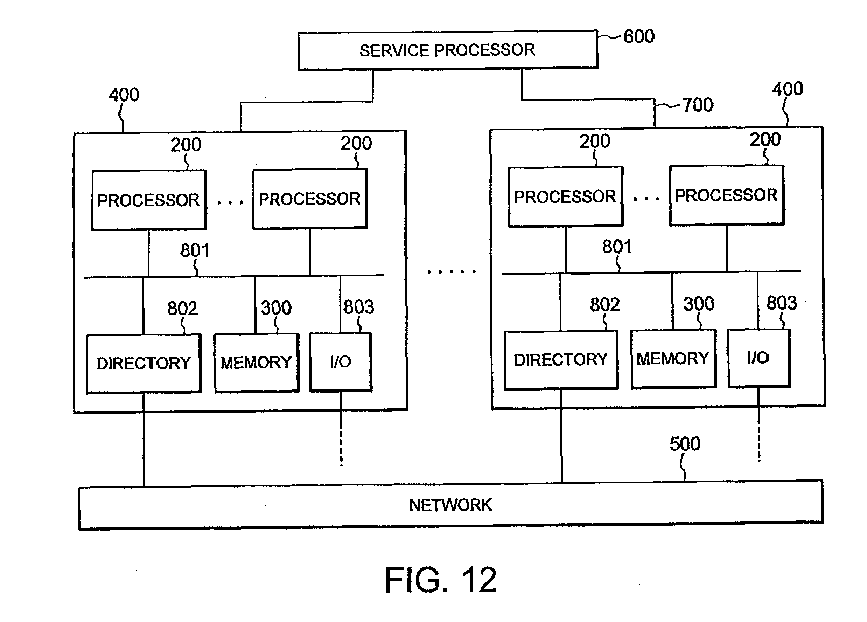

The embodiment described above employs the construction in which the processors 200 and the memories 300 in each cell are connected through the cell control circuit 100. However, it is also possible to employ the construction in which the processors 200 and the memories 300 are connected by a processor bus 801 as shown in Fig. 12. In this case, a directory 802 having the same construction as the cell control circuit 100 is connected to the processor bus 801. In the embodiment described above, each cell does not include an input/output controller. However, an input/output controller 803 may be connected to the processor bus 801 as shown in Fig. 12. In this case, the access to the input/output controller 803 is made in the same way as the access to the memory 300. In other words, each processor 200 can accomplish inter-cell communication by directly gaining access to the input/output controller through the address designation of the ordinary input/output operation without the necessity for recognizing to which cell the input/output controller is physically assigned. Speaking more concretely, when the I/O request generated inside its own cell is directed to the input/output controller mounted to its own cell, the directory 802 transfers this I/O request to the input/output controller of its own cell and reports the result to the requesting source. On the other hand, when the I/O request generated in its own cell is directed to the input/output controller mounted to other cell, the directory 802 transfers the I/O request to other cell through the mutual connection network, and other cell gains access to its input/output controller and returns the result to the requesting cell through the mutual connection network and reports to the requesting source.

As described above, the present invention can prevent propagation of the fault when any fault occurs in a certain cell during the system operation. For, when the fault occurs, the service processor that receives the fault report stops simultaneously the operation of all the cells.

The present invention can also improve system reliability and versatility. For, after stopping temporarily the operation of all the cells, the service processor collects information necessary for the fault analysis, executes the analysis, stipulates a suspected cell, logically cuts off the suspected cell from the system, reconstructs the system, releases the temporary stop condition of each cell and then continues the system operation.

## Claims

1. A fault recovery method of a multiprocessor system including a plurality of cells each comprising a memory and at least one processor and connected to one another through a mutual connection network, and a service processor connected to each of said cells, comprising the steps of:
sending a fault report from said cell detecting said fault at the time of access to a shared resource inclusive of said memory, to said service processor; and
stopping instantaneously by means of said service processor receiving said fault report the operation of all of said cells.

2. A fault recovery method of a multiprocessor system according to claim 1, wherein said service processor instructs immediately all of said cells to temporarily stop the operation upon receiving said fault report.

3. A fault recovery method of a multiprocessor according to claim 1 or 2, wherein said service processor turns back hardware-wise said fault report it receives as a command for temporarily stopping the operation of said cells, and broadcasts the command to all of said cells.

4. A method according to claim 1, 2 or 3,
further comprising the steps of:
stopping temporarily the operation of all of said cells, and then collecting information necessary for a fault analysis from each of said cells and executing the fault analysis by means of said service processor;
after the fault analysis, cutting off logically by means of said service processor a suspected cell from the system and reconstructing the system; and
after system reconstruction, releasing by means of said service processor the temporary stop condition of each of said cells and continuing the system operation.

5. A multiprocessor system including a plurality of cells each comprising a memory and at least one processor and connected to one other through a mutual connection network, and a service processor connected to each of said cells, wherein:
each of said cells sends a fault report to said service processor upon detecting any fault at the time of access to a shared resource including said memory; and
said service processor executes the step of instantaneously stopping the operation of all of said cells upon receiving said fault report.

6. A multiprocessor according to claim 5, wherein said service processor instructs immediately all of said cells to stop temporarily the operation upon receiving said fault report.

7. A multiprocessor according to claim 5 or 6, wherein said service processor turns back hardware-wise said fault report it receives as a command for temporarily stopping the cell operation and broadcasts the command to all of said cells.

8. A multiprocessor system according to claim 5,6 or 7, wherein said service processor further executes the steps of:
after stopping temporarily the operation of all of said cells, collecting information necessary for a fault analysis from each of said cells, and executing the fault analysis for stipulating a suspected cell;
after the fault analysis, cutting off logically said suspected cell from the system and reconstructing the system; and
after system reconstruction, releasing the temporary stop condition of each of said cells and continuing the system operation.
